# EUROPÄISCHE PATENTANMELDUNG

(11) **EP 1 645 826 A2**
(43) Veröffentlichungstag der Anmeldung: **12.04.2006**
(21) Anmeldenummer: 05019507.2
(22) Anmeldetag: 08.09.2005
(51) Int. Cl.: F26B 5/02

(54) **Trocknungsverfahren für die Aufnahmeschicht von optischen Speichermedien**

(30) Priorität: 08.10.2004 DE 102004049415
(71) Anmelder: arccure technologies GmbH, 59557 Lippstadt (DE)
(72) Erfinder: Bisges, Michael, 59556 Lippstadt (DE)
(74) Vertreter: Kohlmann, Kai

(57) **Zusammenfassung**

Die Erfindung betrifft ein Verfahren zum Trocknen jeder Aufnahmeschicht eines optischen Speichermediums mit mindestens einer zu einer Rotationsachse symmetrischen Substratscheibe.

Um den Trocknungsprozess der Aufnahmeschicht zu verkürzen, der einen wesentlichen Teil der Herstellungszeit für optische Speichermedien beansprucht, wird erfindungsgemäß vorgeschlagen, dass jede Aufnahmeschicht der Substratscheibe mittels Ultraschallwellen zu Schwingungen angeregt wird und die Frequenz der Ultraschalwellen im Absorptionsbereich der Aufnahmeschicht liegt.

Des Weiteren wird eine Anordnung zur Durchführung des Verfahrens vorgeschlagen.

## Beschreibung

Die Erfindung betrifft ein Verfahren zum Trocknen jeder Aufnahmeschicht eines optischen Speichermediums mit mindestens einer zu einer Rotationsachse symmetrischen Substratscheibe. Außerdem betrifft die Erfindung eine Anordnung zur Durchführung des Verfahrens.

Optische Speichermedien besitzen eine Spur, die spiralförmig von innen nach außen verläuft. In dieser Richtung wird die Spur von einem Laser abgetastet, um die auf dem Speichermedium befindlichen Daten zu lesen. Die optischen Speichermedien bestehen im Wesentlichen aus einer oder zwei Substratscheiben, beispielsweise aus Polycarbonat, sowie einer oder mehreren auf den Substratscheiben aufgebrachten Aufnahmeschichten. Die Aufnahmeschichten aus Lack (Dye) weisen die digitalen Informationen in Form von mikroskopisch kleinen spiegelnden Vertiefungen ("Pits") und nicht spiegelnden Zwischenräumen ("Lands") auf, die in der spiralförmigen Spur angeordnet sind. Die Pits werden durch einen sehr heißen Laserstrahl gebildet, der den die Aufnahmeschicht bildenden Lack wegbrennt. Überall wo binär eine eins stehen muss gibt es einen Pit, also eine Vertiefung, und dort wo binär Null sein soll, bleibt ein Land.

Heute gängige Formate für optische Speichermedien sind ROM (kurz für: read only memory), WORM (kurz für: write once read many) sowie RW (kurz für: rewritable). Das Format ROM kann nur gelesen werden. Die wiederbeschreibbaren CD RW-Speichermedien sind grundsätzlich wie eine beschreibbare CD R aufgebaut. Unterschiede ergeben sich lediglich hinsichtlich der reflektierenden Schichten.

Wegen des zunehmenden Speicherbedarfes gibt es sämtliche vorgenannten Formate für optische Speichermedien auch als DVD. Die DVD hat die gleichen Abmessungen wie eine CD, kann jedoch ein Vielfaches ihrer Daten speichern. Dazu wurden die Pits auf eine Größe von 0,4 Mikrometer reduziert und der Abstand der Spur auf 0,74 Mikrometer verringert. Um diese kleinen Pits genau abtasten zu können, ist darüber hinaus die Wellenlänge des Abtastlasers geringer als bei CDs. Man erreicht dadurch die fünfundzwanzigfache Kapazität einer CD. Auf der DVD kann auf zwei Ebenen übereinander und auf jeder Seite gespeichert werden. Die zweischichtige Speicherung wird dadurch erreicht, dass halbdurchlässiges Material für die erste Schicht verwendet wird, während die zweite Schicht undurchlässig ist. Der Abtast-Laser wird zum Lesen auf eine der beiden Schichten fokussiert. Aus diesem Grunde weisen DVDs zwei Substratscheiben auf, die miteinander verklebt sind.

Aufgrund der bei DVDs und künftigen optischen Speichermedien zunehmenden Speicherdichte ist es erforderlich, die Abtastgeschwindigkeit zu erhöhen, um akzeptable Datenübertragungsraten zu erzielen. Infolge dessen werden die Anforderungen an die Gleichförmigkeit optischer Speichermedien immer höher.

Auf der Oberfläche der Substratscheibe aus durchsichtigem Polycarbonat wird die Aufzeichnungsschicht aus Lack über ein Schleuderverfahren aufgebracht. Hieran schließt sich ein Trocknungsprozess mittels Wärmekonvektion an. Aus der DE 199 04 045 C1 ist eine Vorrichtung zum Trocknen von Substraten bekannt, bei der die Substrate durch einen Ringraum transportiert werden, der von einem Warmluftstrom durchströmt wird. Im inneren des Ringraums befindet sich zu diesem Zweck ein Gebläse und eine Heizvorrichtung zur Erzeugung des erwärmten Luftstroms, der über eine Öffnung entgegen der Bewegungsrichtung der Substratscheiben innerhalb des Ringraumes in diesen eingeleitet und über eine weitere Öffnung aus diesem abgeleitet wird. Die Temperatur innerhalb der Vorrichtung beträgt typischerweise zwischen 70 °C - 120 °C. Hieraus resultieren Trocknungszeiten zwischen 10 - 30 min.

Die Trocknung bewirkt, dass die leicht flüchtigen Lösemittel aus dem die Aufnahmeschicht bildenden Lack verdampfen. Des Weiteren führt die Erwärmung dazu, dass sich die Lackschicht in der Spur des Substrats verdichtet. Diese Verdichtung ist erforderlich, um die Dicke der Aufnahmeschicht innerhalb der vorgeformten Spur zu Vergleichmäßigen. Anschließend wird die getrocknete Oberfläche mit einem dünnen Aluminiumfilm, der Reflektionsschicht, bedampft und schließlich mit einem Schutzlack überzogen.

Schließlich ist aus der DE 199 10 391 A1 ein Verfahren zur Entfernung von Wasser von Halbleiterwafern mittels Ultraschallschwingungen bekannt. Die Ultraschallschwingungen werden über ein Gas auf die Wafer übertragen.

Ausgehend von diesem Stand der Technik liegt der Erfindung die Aufgabe zugrunde, den Trocknungsprozess der Aufnahmeschicht zu verkürzen, der einen wesentlichen Teil der Herstellungszeit für optische Speichermedien beansprucht. Des Weiteren soll eine Anordnung zur Durchführung des Verfahrens vorgeschlagen werden.

Diese Aufgabe wird erfindungsgemäß dadurch gelöst, dass bei einem Verfahren der eingangs erwähnten Art jede Aufnahmeschicht mittels Ultraschallwellen zu Schwingungen angeregt wird und die Frequenz der Ultraschalwellen im Absorptionsbereich der Aufnahmeschicht liegt.

Die Verwendung von Ultraschallwellen verkürzt die Trocknungszeit auf etwa 1 - 4 Sekunden je Substratscheibe. Die durch die Ultraschallwellen angeregten kurzzeitigen, intensiven Molekülbewegungen in der Aufnahmeschicht verdichten die Molekülstruktur, während gleichzeitig etwa in der Aufnahmeschicht eingeschlossene Luft ausgetrieben wird. Die durch die Ultraschallwellen hervorgerufene Reaktion ist mit einem Sinter-Prozess vergleichbar.

Je nach Zusammensetzung des die Aufnahmeschicht bildenden Lacks werden unterschiedliche Wellenlängen absorbiert. Insoweit wird erfindungsgemäß die Frequenz der Ultraschallwellen an den jeweiligen Absorptionsbereich angepasst. Eine besonders effektive Anregung der Moleküle der zu trocknenden Aufnahmeschicht wird erreicht, wenn die Frequenz der Ultraschallwellen im Absorptionsbereich der Aufnahmeschicht liegt, wobei die Frequenz der Ultraschalwellen zunächst im Absorptionsbereich des in der Aufnahmeschicht enthaltenen Lösungsmittels und sodann im Absorptionsbereich der in der Aufnahmeschicht enthaltenen Farbstoffmoleküle liegt.

Überraschend hat sich herausgestellt, dass die neuartige Trocknung der Aufnahmeschicht mittels Ultraschallwellen nicht nur den Trocknungsprozess verkürzt, sondern darüber hinaus aufgrund des verbesserten Aufbaus der Aufnahmeschicht in der Spur eine Verbesserung des Jitter-Wertes zur Folge hat. Baut der Lack der Aufnahmeschicht in der Rille zu hoch, hat dies eine Verzerrung des Widergabesignals und eine Erhöhung des Jitter-Wertes zur Folge. Der Jitter-Wert ist ein Maß für die Qualität des hergestellten optischen Speichermediums. Ein niedriger Wert zeigt an, dass die Pits in ihrer Länge und Höhe gleichförmig sind und es daher dem Wiedergabegerät ermöglichen, Daten in Übereinstimmung mit dem Systemtakt zu erzeugen und hierdurch die Wahrscheinlichkeit von Wiedergabefehlern zu vermeiden.

Der Trocknungsprozess, insbesondere die Verdampfung der leicht flüchtigen Lösungsmittel aus der Aufnahmeschicht, lässt sich wirksam unterstützen, wenn zusätzlich zu den Ultraschallwellen Energie in die Aufnahmeschicht durch Wärmestrahlung oder durch Wärmekonvektion eingebracht wird.

Wird die zusätzliche Energie durch Wärmestrahlung eingebracht, wird als Energiequelle vorzugsweise eine elektromagnetische Strahlungsquelle verwendet, die im Infrarotbereich abstrahlt. Um eine unnötige Wärmebelastung des wärmeempfindlichen Substratmaterials zu vermeiden, sollte die Bestrahlungsvorrichtung in erster Linie Strahlung im nahen Infrarotbereich (NIR) abstrahlen. Typische Bestrahlungsvorrichtungen für diese Zwecke werden auch als Hellstrahler-Systeme bezeichnet. Sie weisen Quarzlampen - Lampen mit Quarzglaskolben - auf, die überwiegend kurzwellige Infrarotstrahlung nah am sichtbaren Spektrum mit der größten Intensität erzeugen. Der zentrale physikalische Vorteil der Trocknung mit Strahlung vorwiegend im NIR-Bereich besteht darin, dass die elektromagnetische Energie direkt von der zu trocknenden Aufnahmeschicht absorbiert wird. Die Wärme wirkt daher dort, wo sie wirken soll, nicht jedoch in dem hitzeempfindlichen Substrat.

Alternativ ist es jedoch auch möglich, die zusätzliche Energie in Form eines erwärmten Gasstroms einzubringen. Die Erzeugung und Zuführung von Heißluft zu der zu trocknenden Aufnahmeschicht ist an sich bekannt und bedarf daher keiner weiteren Erläuterung.

Die Schwingungsanregung in jeder Substratscheibe mittels Ultraschallwellen erfolgt entweder mittels eines an jede Substratscheibe mechanisch koppelbaren Ultraschallgenerators oder indirekt mit einem im Abstand zu jeder Substratscheibe angeordneten Ultraschallstrahler.

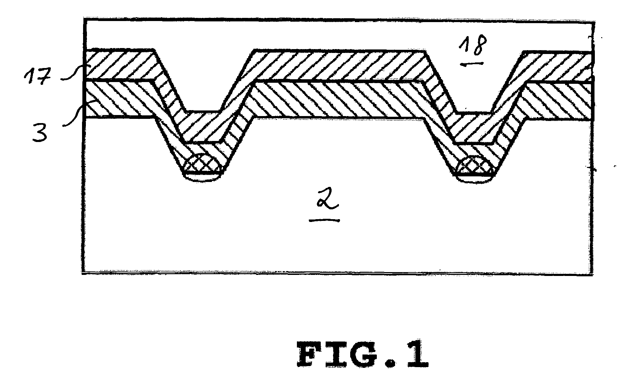

Nachfolgend wird die Erfindung anhand der Zeichnungen näher erläutert. Es zeigen
- **Figur 1**: einen schematischen Schnitt durch eine DVD,
- **Figur 2**: ein erstes Ausführungsbeispiel einer Anordnung zum Durchführen des Verfahrens mit unmittelbarer mechanischer Einkopplung der Ultraschallwellen,
- **Figur 3**: ein zweites Ausführungsbeispiel einer Anordnung zur Durchführung des Verfahrens mit unmittelbarer mechanischer Einkopplung der Ultraschallwellen sowie
- **Figur 4**: ein Ausführungsbeispiel einer Anordnung zum Durchführen des Verfahrens mit mittelbarer Einkopplung der Ultraschallwellen.

In einer Substratscheibe 2 aus Polycarbonat wird mittels eines Spritzgießprozesses eine Spur, der sogenannte Groove abgeformt. Anschließend wird etwa mittig ein Lack, der sogenannte Dye, auf die Substratscheibe 2 aufgebracht. Diese Lackschicht wird als Aufnahmeschicht 3 bezeichnet. Oberhalb der Aufnahmeschicht 3 befindet sich eine Reflexionsschicht 17, beispielsweise aus Aluminium, Silber, Gold oder Silizium, die durch Bedampfung aufgebracht wird. Schließlich wird die Reflexionsschicht mit einem Schutzlack 18 überzogen.

Vor dem Aufbringen der Reflexionsschicht 17 sowie des Schutzlacks 18 muss zunächst die Aufnahmeschicht 3 getrocknet werden. Die Trocknung dient der Verdampfung der leicht flüchtigen Lösemittel aus dem Lack (Dye) sowie der Verdichtung des Dye in der Spur, um eine gleichmäßige Verteilung des Dye's innerhalb der Spur zu erreichen. Ist in der Spur zu viel Dye enthalten, verschlechtert sich der eingangs beschriebene Jitter-Wert, folglich die Qualität der Wiedergabe des optischen Speichermediums.

Die Trocknung erfolgt nach Aufbringung der Aufnahmeschicht 3, indem die Substratscheibe 2 mittels Ultraschallwellen zu Schwingungen angeregt wird.

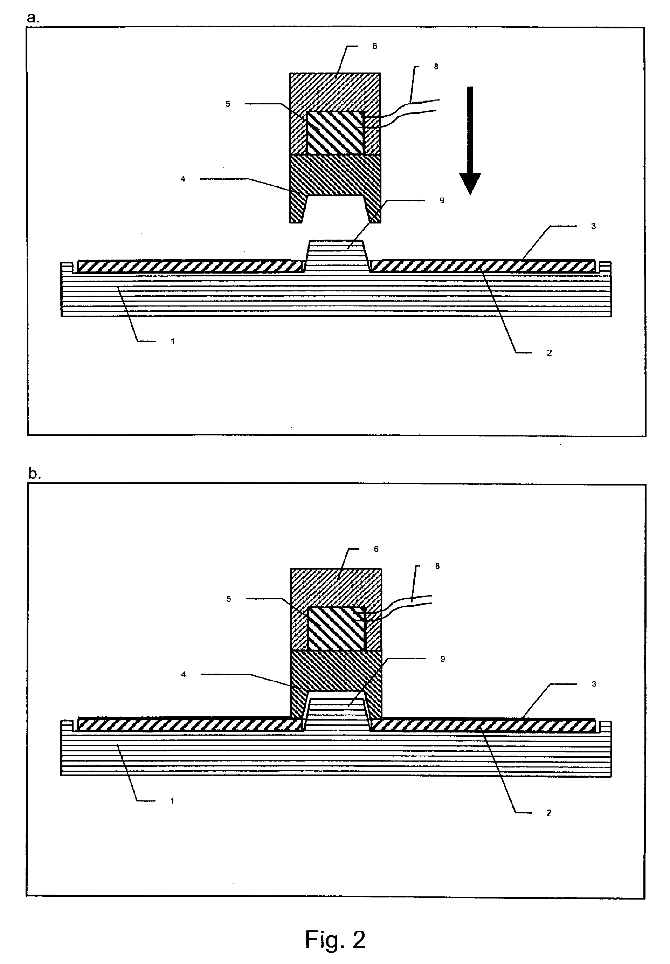

Die Anordnung zur Trocknung nach Figur 2 weist eine Auflagescheibe 1 zur Aufnahme der Substratscheibe 2 auf, auf deren Oberfläche sich die Aufnahmeschicht 3 befindet, die mittels Ultraschallwellen getrocknet wird. Ein Zentrierstift 9, der sich durch das Mittelloch der Substratscheibe 2 erstreckt, fixiert die Substratscheibe 2 auf der Auflagescheibe 1.

In Verlängerung oberhalb des Zentrierstifts 9 befindet sich ein Gehäuse 6, das in senkrechter Richtung zur Oberfläche der Auflagescheibe 1 und der Substratscheibe 2 beweglich angeordnet ist. Die Bewegungsrichtung ist in Figur 2a mittels des schwarzen Pfeils dargestellt. Das Gehäuse 6 ist mittels eines nicht dargestellten Antriebs zwischen den in den Figuren 2 a und 2 b dargestellten Positionen hin und her bewegbar. Das Gehäuse 6 umgibt einen Ultraschallgenerator 5, der über die Kabelanschlüsse 8 mit Energie versorgt wird. Das Gehäuse 6 weist an seiner nach unten, in Richtung der Substrat-Schreibe 2 sowie des Zentrierstifts 9 weisenden Fläche einen Klemmbock 4 auf, der unten soweit geöffnet ist, dass er den über die Substratscheibe 2 hinausragenden Zentrierstift 9 vollständig aufnehmen kann. Der die Öffnung umgebende kreisringförmige Rand des Klemmbocks 4 setzt, wie aus Figur 2b ersichtlich, in der abgesenkten Position auf dem nicht mit dem Lack (Dye) der Aufnahmeschicht versehenen Innenbereich der Substratscheibe 2 auf. Hierdurch entsteht eine direkte mechanische Kopplung zwischen dem Ultraschallgenerator 5 und der Substratscheibe 2. Wird nun der Ultraschallgenerator 5 in Betrieb genommen, überträgt dieser die Schwingungen über den Klemmbock 4 auf die Substratscheibe 2 und regt diese zu Schwingungen an.

Nach dem Trocknungsvorgang, der etwa 1 - 4 Sekunden dauert, wird das Gehäuse 6 mit dem Klemmbock 4 wieder in die in Figur 2a dargestellte Ausgangsposition verfahren, und die getrocknete Substratscheibe 2 von einer nicht dargestellten Handhabungsvorrichtung, die beispielsweise mittels Unterdruck arbeitet, von der Auflagescheibe 1 entnommen. Anschließend wird eine neue Substratscheibe 2 auf die Auflagescheibe 1 aufgelegt und der Trocknungsvorgang wiederholt sich.

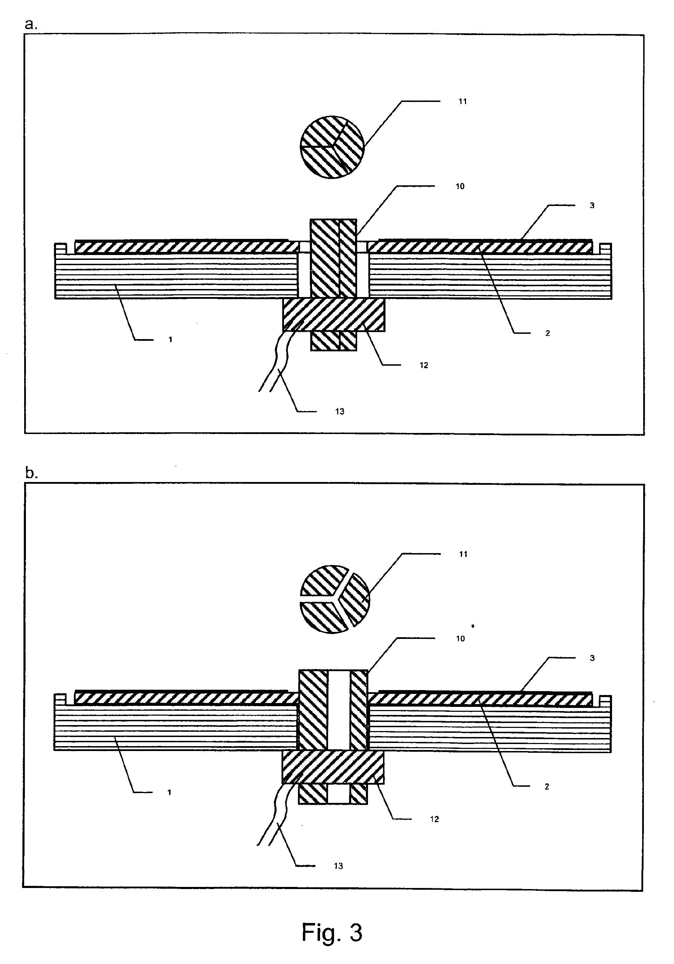

Die Ausführungsform nach Figur 3 unterscheidet sich von der Ausführungsform nach Figur 2 dadurch, dass kein feststehender Zentrierstift 9, sondern ein verstellbarer kreiszylindrischer Mitteldorn 10 vorgesehen ist. Aus der Aufsicht 11 auf den verstellbaren Mitteldorn in den Figuren 3a, 3b ist erkennbar, dass der Mitteldorn aus drei zylindrischen Kreissegmenten besteht, die miteinander in Anlage bringbar (vgl. Figur 3a) sowie voneinander weg bewegbar (vgl. Figur 3b) sind.

Zum Auflegen der zu trocknenden Substratscheibe wird der'verstellbare Mitteldorn 10 zunächst in die in Figur 3a dargestellte geschlossene Stellung gebracht und die Substratscheibe 2 mit dem Mittelloch über den Mitteldorn 10 gestülpt und auf die Auflagefläche 1 aufgelegt. Anschließend werden die zylindrischen Kreissegmente in die in Figur 3b dargestellte geöffnete Position gebracht, so dass die Kreissegmente mit ihren Außenmantelflächen an dem Rand des Mittellochs zur Anlage gelangen. Hierdurch wird eine mechanische Kopplung zwischen der Substratscheibe 2 und dem Mitteldorn 10 hergestellt.

Der Mitteldorn 10 erstreckt sich auf beiden Seiten der Auflagescheibe 1 über deren Oberfläche hinaus. An der Oberseite dient er der beschriebenen Fixierung und Ausrichtung der Substratscheibe 2, während an der Unterseite der Ultraschallgenerator 12 angeordnet ist, der über Kabelanschlüsse 13 mit Energie versorgt wird.

Wird nun der Ultraschallgenerator 12 in Betrieb genommen, überträgt dieser seine Schwingungen über den verstellbaren Mitteldorn 10 auf die Substratscheibe 2, sofern sich der Mitteldorn 10 in der in Figur 3b dargestellten geöffneten Position befindet.

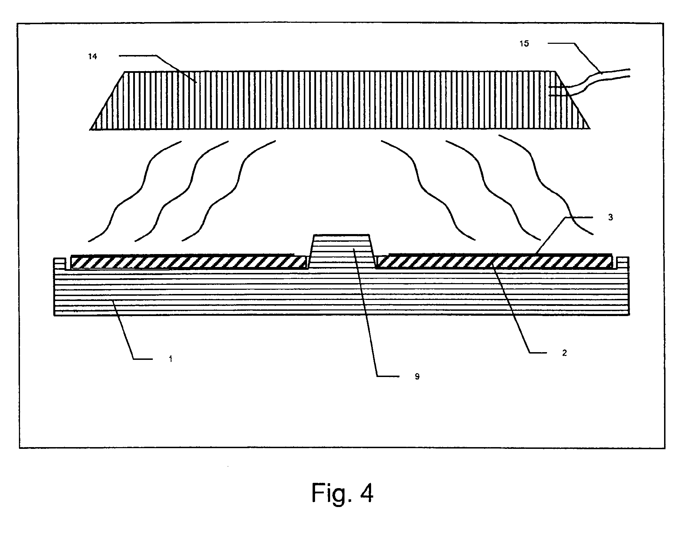

Figur 4 zeigt schließlich eine Anordnung zur Durchführung des Verfahrens, bei der die Ultraschallwellen eines Ultraschallgenerators 14 durch die Luft, also ohne mechanische Kopplung mit der Substratscheibe 2, eingekoppelt werden. Zu diesem Zweck ist oberhalb der Auflagescheibe 1, die entsprechend der Auflagescheibe 1 nach Figur 2 gestaltet ist, der Ultraschallgenerator 14, beispielsweise in Form eines Lautsprechers, angeordnet. Die abgestrahlten, in Figur 4 mit Schlangenlinien dargestellten Ultraschallwellen treffen auf die zu trocknende Aufnahmeschicht 3 auf, sobald der Ultraschallgenerator 14 über die Kabelanschlüsse 15 mit Energie versorgt wird.

Die Abstrahlfläche des Ultraschallgenerators 14 ist vorzugsweise parallel und nahezu deckungsgleich mit der zu trocknenden Aufnahmeschicht 3. Hierdurch wird gewährleistet, dass die Intensität der Ultraschallwellen in der gesamten Aufnahmeschicht 3 homogen ist.

### Bezugszeichenliste

| Nr. | Bezeichnung |
|---|---|
| 1. | Auflagescheibe |
| 2. | Substratscheibe |
| 3. | Aufnahmeschicht |
| 4. | Klemmblock |
| 5. | Ultraschallgenerator |
| 6. | Gehäuse |
| 7. | - |
| 8. | Kabelanschlüsse |
| 9. | Zentrierstift |
| 10. | verstellbarer Mitteldorn |
| 11. | Aufsicht Mitteldorn (geschlossen/offen) |
| 12. | Ultraschallgenerator |
| 13. | Kabelanschluss |
| 14. | Ultraschallgenerator |
| 15. | Kabelanschlüsse |
| 16. | - |
| 17. | Reflexionsschicht |
| 18. | Schutzlack |

## Patentansprüche

1. Verfahren zum Trocknen jeder Aufnahmeschicht eines optischen Speichermediums mit mindestens einer zu einer Rotationsachse symmetrischen Substratscheibe, **dadurch gekennzeichnet, dass** jede Aufnahmeschicht (3) mittels Ultraschallwellen zu Schwingungen angeregt wird und die Frequenz der Ultraschalwellen im Absorptionsbereich der Aufnahmeschicht (3) liegt.

2. Verfahren nach Anspruch 1, **dadurch gekennzeichnet, dass** zusätzlich Energie in die Aufnahmeschicht (3) durch Wärmestrahlung eingebracht wird

3. Verfahren nach Anspruch 2, **dadurch gekennzeichnet, dass** als Energiequelle eine elektromagnetische Strahlungsquelle verwendet wird.

4. Verfahren nach Anspruch 1, **dadurch gekennzeichnet, dass** zusätzlich Energie in die Aufnahmeschicht (3) durch Wärmekonvektion eingebracht wird.

5. Verfahren nach Anspruch 4, **dadurch gekennzeichnet, dass** die zusätzliche Energie in Form eines erwärmten Gasstroms eingebracht wird.

6. Verfahren nach Anspruch 1, **dadurch gekennzeichnet, dass** die Frequenz der Ultraschalwellen zeitweilig im Absorptionsbereich des in der Aufnahmeschicht (3) enthaltenen Lösungsmittels und zeitweilig im Absorptionsbereich der in der Aufnahmeschicht (3) enthaltenen Farbstoffmoleküle liegt.

7. Verfahren nach einem der Ansprüche 1 bis 6, **dadurch gekennzeichnet, dass** die Ultraschallwellen mittels eines mechanisch an jede Substratscheibe koppelbaren Ultraschallgenerators (5,12) in die Aufnahmeschicht (3) eingekoppelt werden.

8. Verfahren nach einem der Ansprüche 1 bis 6, **dadurch gekennzeichnet, dass** die Ultraschallwellen mittels eines Ultraschallstrahlers (14) in jede Aufnahmeschicht (3) eingekoppelt werden.

9. Anordnung zum Durchführen des Verfahrens nach einem der Ansprüche 1 bis 7, **gekennzeichnet durch** eine Auflage (1) für jede Substratscheiben (2) und mindestens einen Ultraschallgenerator (5,12) zur Schwingungsanregung jeder Substratscheibe (2), wobei der Ultraschallgenerator mechanisch an die Substratscheibe (2) und/oder die Auflage (1) koppelbar ist.
